# EUROPÄISCHE PATENTANMELDUNG

(11) **EP 3 521 238 A2**
(43) Veröffentlichungstag der Anmeldung: **07.08.2019**
(21) Anmeldenummer: 18212628.4
(22) Anmeldetag: 14.12.2018
(51) Int. Cl.: B67C 7/00, B67B 3/20, B67C 3/24

(54) **VORRICHTUNG ZUM TRANSPORTIEREN EINES BEHÄLTERS**

(30) Priorität: 14.12.2017 DE 102017130036
(71) Anmelder: KRONES AG, 93073 Neutraubling (DE)
(72) Erfinder: Kai-Uwe, Dreger, 93073 Neutraubling (DE); Martin, Wagner, 93073 Neutraubling (DE)
(74) Vertreter: Nordmeyer, Philipp Werner

(57) **Zusammenfassung**

Die vorliegende Erfindung betrifft Vorrichtung (10) zum Transportieren eines befüllten Behälters (40) in einer Rundläufervorrichtung, bevorzugt von einem Rundläuferfüller (20) zu einem Verschließer (30), umfassend: einen um eine Rotationsachse (R1) rotierenden Rundläufer mit einem Halteelement (12) zum Aufnehmen des Behälters (40), wobei das Halteelement (12) derart ausgebildet, dass der befüllte Behälter (40) so gehalten ist, dass eine senkrecht durch eine Mündungsöffnungsquerschnittebene (44) des Behälters (40) verlaufende Behälterachse (B) unterhalb des Halteelements (12) auf die Rotationsachse (R1) zu gerichtet ist.

## Beschreibung

### Technisches Gebiet

Die vorliegende Erfindung betrifft eine Vorrichtung zum Transportieren eines Behälters in einer Rundläufervorrichtung, bevorzugt zum Transportieren eines Behälters von einem Rundläuferfüller zu einem Verschließer, umfassend einen um eine Rotationsachse rotierenden Rundläufer mit einem Halteelement zum Aufnehmen des Behälters.

### Stand der Technik

Behälter werden in der Regel in einem Füller mit einem Füllprodukt befüllt und anschließend von einer Übergabevorrichtung an einen Verschließer übergeben. Als Füller kommen dabei häufig Rundläuferfüller zum Einsatz, bei welchen die Behälter, während sie von dem Rundläuferfüller befördert und befüllt werden, bauartbedingt eine Zentrifugalbeschleunigung erfahren.

Weiterhin sind Füller bekannt, welche neben dem Füllen des Behälters auch Herstellschritte des Behälters umfassen. Beispielsweise sind Blasfüller bekannt, in welchen ein zu befüllender Behälter zunächst im Streckblasverfahren mit Hilfe einer Blasform aus einem Kunststoffrohling geformt wird und anschließend der noch in der Blasform befindliche Behälter mit Füllprodukt gefüllt wird. Alternativ können die Schritte des Blasens und des Befüllens auch gleichzeitig ablaufen. Dabei wird das Füllprodukt, zum Beispiel eine Flüssigkeit, direkt als Blasfluid dazu verwendet, die Form des Behälters auszuformen.

Auch die während des Blasformens in einem Rundläuferblasfüller befindlichen Behälter erfahren bauartbedingt eine Zentrifugalbeschleunigung.

Diese Zentrifugalbeschleunigung kann zu einem Austreten der Flüssigkeit aus dem noch nicht verschlossenen Behälter führen. Insbesondere an einem Übergabepunkt, an dem der Behälter von dem Rundläuferfüller an eine Übergabevorrichtung, zum Beispiel einen Transferstern, übergeben wird, oder beim Übergeben vom Transferstern an einen Verschließer kann es zu einem Überschwappen des Füllprodukts kommen.

Dieses Überschwappen kann insbesondere durch einen Impuls hervorgerufen werden, welchen das in dem Behälter befindliche Füllprodukt am Übergabepunkt zwischen Rundläuferfüller und Rundläufer und/oder am Übergabepunkt zwischen Rundläufer und Verschließer erfährt. Durch die Zentrifugalbeschleunigung wird das Füllprodukt an die außen liegende Seite des Behälters gedrückt, wodurch der Pegel des Füllprodukts an dieser Seite ansteigt und entsprechend die Oberfläche des Füllprodukts in dem Behälter schräg nach innen gerichtet ist. Am Übergabepunkt, an welchem die Rotationsachse, um welche der Behälter rotiert, wechselt, wechselt auch die Richtung der auf den Behälter wirkenden Zentrifugalbeschleunigung. Entsprechend durchläuft der Behälter hier eine S-Kurve, wobei der Übergabepunkt den Punkt darstellt, an dem die Krümmung der S-Kurve gleich Null ist. Das Füllprodukt in dem Behälter erfährt aufgrund des Richtungswechsels und des Wechsels der auf den Behälter wirkenden Zentrifugalbeschleunigung einen Impuls, welcher unmittelbar auch auf das Füllprodukt wirkt. Das Füllprodukt hat dadurch die Tendenz, schlagartig von der einen Seite, an der es im Füllerkarussell angestiegen war, auf die gegenüberliegende Seite zu drängen und entsprechend an dieser anzusteigen. Es ergibt sich daraus eine Schwapp- beziehungsweise Schaukelbewegung der Oberfläche des Füllprodukts, welche zu einem Austreten des Füllprodukts aus der Mündung des noch nicht verschlossenen Behälters führen kann.

Dieses Problem kann an allen Übergabepunkten auftreten, an welchen ein bereits gefüllter aber noch unverschlossener Behälter übergeben wird, insbesondere auch an dem Übergabepunkt zwischen einem Füller und einem Transferstern, an dem Übergabepunkt zwischen dem Transferstern und einem Verschließer sowie an dem Übergabepunkt zwischen zwei Transfersternen.

### Darstellung der Erfindung

Ausgehend von dem bekannten Stand der Technik ist es eine Aufgabe der vorliegenden Erfindung eine verbesserte Vorrichtung zur Übergabe eines Behälters von einem Rundläuferfüller an einen Verschließer anzugeben, mittels welcher die Neigung zum Überschwappen bei der Übergabe reduziert werden kann.

Diese Aufgabe wird mittels einer Vorrichtung mit den Merkmalen des Anspruchs 1 gelöst. Vorteilhafte Ausgestaltungen ergeben sich aus den Unteransprüchen.

Entsprechend wird eine Vorrichtung zum Transportieren eines Behälters in einer Rundläufervorrichtung, bevorzugt vom Füller zum Verschließer, angegeben, welche einen um eine Rotationsachse rotierenden Rundläufer mit einem Halteelement zum Aufnehmen des Behälters umfasst. Erfindungsgemäß ist das Halteelement derart ausgebildet, dass ein Behälter so gehalten ist, dass eine senkrecht durch eine Mündungsöffnungsquerschnittebene des Behälters verlaufende Behälterachse unterhalb des Halteelements auf die Rotationsachse zu gerichtet ist.

Durch diese Ausrichtung des Behälters ist es möglich, einen auf das im Behälter vorliegende Füllprodukt wirkenden Impuls an dem Übergabepunkt, an welchem der Behälter von dem Rundläuferfüller an die Vorrichtung übergeben wird und an welchem der Behälter von der Vorrichtung an den Verschließer übergeben wird, abzuschwächen oder auszugleichen. Auf diese Weise kann ein Überschwappen des in dem Behälter befindlichen Füllprodukts an den Übergabepunkten zwischen dem Rundläuferfüller und der Vorrichtung beziehungsweise der Vorrichtung und dem Verschließer reduziert oder ganz unterbunden werden.

Die Mündung beziehungsweise Öffnung des Behälters ist durch eine Mündungsöffnungsquerschnittebene definiert, welche in der Regel senkrecht zu der Behälterachse verläuft. Bei aufrecht stehendem Behälter beziehungsweise nach oben gerichteter Mündung ist die Mündungsquerschnittsebene durch den obersten Rand der Mündung definiert. Bei konventionellen, im Wesentlichen zylinderförmigen Flaschen fällt die Behälterachse mit der Zylinderachse des Behälters zusammen und verläuft daher mittig durch die Mündung. Die Mündungsquerschnittsebene steht entsprechend auch senkrecht zur Behälterachse. Bei unregelmäßigen, asymmetrischen Behälterformen verläuft eine Behälterachse hingegen nicht zwangsläufig durch die Mündung - beispielsweise wenn ein abgewinkelter Mündungsbereich vorliegt. Dennoch kann hier eine Mündungsquerschnittsebene durch den obersten Rand der jeweiligen Mündung aufgespannt werden.

In einer bevorzugten Ausführungsform umfasst das Halteelement eine Schwenkeinrichtung zum Schwenken des Behälters zwischen einer ersten Position, in welcher der Behälter von dem vorgeschalteten Förderelement aufgenommen wird und die Behälterachse beispielsweise parallel zur Rotationsachse verläuft, und einer zweiten Position, in welcher die Behälterachse unterhalb des Halteelements auf die Rotationsachse der Vorrichtung zu gerichtet ist. So wird es möglich, den Behälter von einem vorgeschalteten Förderelement, beispielsweise von einem Rundläuferfüller, in welchem die Behälterachsen der Behälter im Wesentlichen parallel zur Rotationsachse geführt werden, zu übernehmen und anschließend in die gewünschte Position zu schwenken.

Durch die Möglichkeit den Behälter zu schwenken, kann der Behälter in jeder beliebigen, geeigneten Position von dem vorgeschalteten Förderelement übernommen werden. Durch eine an die Position des Behälters auf dem vorgeschalteten Förderelement angepasste Schwenkbewegung kann dann dem am Übergabepunkt wirkenden Impuls entgegengewirkt werden. Durch die Möglichkeit des aktiven Beeinflussens der Schwenkbewegung kann weiterhin ein Verschwenken des Behälters in einer Weise vorgenommen werden, die unabhängig von der eigentlichen Übergabe des Behälters am Übergabepunkt ist und kann weiterhin in Beschleunigung und Amplitude auch so ausgeführt werden, dass eine Reduktion der Schwappneigung erreicht werden kann.

Die Schwenkbewegung kann dabei unmittelbar während oder direkt nach der Aufnahme des Behälters durch das Halteelement erfolgen. Auf diese Weise wird der Impuls, den das Füllprodukt in dem Behälter durch den Richtungswechsel, insbesondere den Wechsel der Richtung der Zentrifugalbeschleunigung erfährt, ausgeglichen, so dass die Gefahr des Überschwappens des Füllprodukts aus dem Behälter reduziert wird.

In einer Weiterbildung ist die Schwenkeinrichtung mittels einer Kurve, einem Pneumatikzylinder und/oder einem Elektromagneten ansteuerbar. Dadurch ist es möglich, eine aktive Ansteuerung der Schwenkeinrichtung bereitzustellen.

In einer bevorzugten Ausgestaltung ist das Halteelement derart ausgebildet, dass der Behälter in einem unveränderlichen Winkel von dem vorgeschalteten Förderelement aufgenommen und transportiert werden kann. Dadurch ist es möglich, am Übergabepunkt, an welchem der Behälter von dem Rundläuferfüller an die Vorrichtung übergeben wird und an welchem der Behälter von der Vorrichtung an den Verschließer übergeben wird, den auf das Füllprodukt wirkenden Impuls abzuschwächen oder auszugleichen, ohne dass der Behälter im Zeitpunkt der Übergabe eine Schwenkbewegung erfährt. Folglich ändert eine Behälterachse ihre Neigung relativ zu der Rotationsachse der Vorrichtung nicht, wenn der Behälter von dem Halteelement erfasst beziehungsweise von diesem abgegeben wird. Damit wird der Impuls, den der Behälter bei einer Verschwenkbewegung auf das Füllprodukt ausüben würde, reduziert oder ganz vermieden.

Weiterhin wird bei einer solchen Übernahme mit unverändertem Winkel keine aufwändige Ansteuerung des Halteelements benötigt. Da das Halteelement an den Übergabepunkten keine Schwenkbewegung durchführt, mittels welcher der Behälter entlang seiner Achse geschwenkt wird, kann an den Übergabepunkten, das heißt, an dem Übergabepunkt zwischen dem Rundläuferfüller und der Vorrichtung oder dem Übergabepunkt zwischen der Vorrichtung und dem Verschließer, ein Überschwappen des Füllprodukts im Behälter reduziert beziehungsweise verhindert werden.

In einer bevorzugten Ausführungsform verläuft das Halteelement schräg zur Rotationsachse der Vorrichtung. Dadurch wird die Aufnahme des Behälters durch das Halteelement erleichtert, wenn der Behälter auf dem Rundläuferfüller schräg gegenüber der Rotationsachse des Rundläuferfüllers angeordnet ist.

Dabei ermöglicht die schräge Anordnung des Halteelements, dass der Behälter am Übergabepunkt in seiner gegenüber der Rotationsachse des Rundläuferfüllers geneigten Position übernommen werden kann. Das schräg zur Rotationsachse der Vorrichtung verlaufende Halteelement ermöglicht es den Behälter derart zu halten, dass an dem Übergabepunkt von der Vorrichtung zum Verschließer die Behälterachse eine Neigung gegenüber der Rotationsachse des Verschließers aufweist, in welcher der Behälter während des weiteren Transports auf dem Verschließer gehalten wird.

In einer Weiterbildung umfasst das Halteelement ein Klammerpaar zum Aufbringen einer Klemmkraft auf den Behälter. Dabei dient das Klammerpaar zum Greifen des Behälters. Mittels der Klemmkraft kann der Behälter während dem Transport auf der Vorrichtung sicher gehalten werden.

In einer weiter bevorzugten Ausführungsform ist der Rundläuferfüller ein Blasfüller zum Blasen und Füllen von Kunststoffbehältern. In einem Blasfüller sind die Blasformen zur Erzeugung höherer Leistungen üblicherweise schräg nach außen gerichtet, so dass die Behälterachse unterhalb der Blasformen von der Rotationsachse des Blasfüllers fort zeigt. Bei der nachfolgenden Übergabe an die Vorrichtung muss entsprechend keine Verschwenkbewegung der gefüllten Behälter vorgenommen werden und die Behälter werden in einer Ausrichtung weiter transportiert, welche im Wesentlichen der Ausrichtung der Behälter im Blasfüller nach dem Entformen entspricht. Ein Verschwenken der Behälter bei der Übergabe vom Blasfüller an die Vorrichtung zum Transportieren ist daher nicht notwendig, so dass der Behälter keinen Impuls auf das im Behälter aufgenommene Füllprodukt ausübt und daher ein Überschwappen reduziert oder vermieden werden kann.

In einer weiteren bevorzugten Weiterbildung umfasst die Vorrichtung weiterhin eine Abdeckvorrichtung zur Abdeckung der Mündung des Behälters. Dadurch ist es möglich, ein Austreten von Füllprodukt aus dem Behälter durch dessen Mündung während des Transports des Behälters mit der Vorrichtung zu verhindern. Dabei kann die Abdeckvorrichtung zwischen zwei Positionen geschaltet werden, wobei sich die Abdeckvorrichtung am Übergabepunkt, an welchem der Behälter von dem Rundläufer an die Vorrichtung übergeben wird, auf die Behältermündung absenkt. Dies geschieht entweder zeitgleich mit der Kontaktaufnahme des Behälters mit dem Halteelement oder nachdem der Behälter bereits von dem Halteelement aufgenommen worden ist. An dem Übergabepunkt, an welchem der Behälter von der Vorrichtung an den Verschließer übergeben wird, wird die Abdeckvorrichtung dann wieder von der Mündung des Behälters entfernt, wodurch sich der Behälter dann in einem offenen Zustand befindet und mit einem Verschließelement in Kontakt gebracht werden kann. Das Entfernen der Abdeckvorrichtung von der Mündung des Behälters kann zeitgleich mit dem Übergeben des Behälters von dem Halteelement durchgeführt werden. Alternativ ist die Trennung des Abdeckelements von der Mündung des Behälters der Trennung des Behälters von dem Halteelement zeitlich vorausgeschaltet oder dieser nachgeschaltet.

In einer weiter bevorzugten Ausgestaltung stellt die Abdeckvorrichtung eine zusätzliche Klemmkraft zum Fixieren des Behälters in dem Halteelement bereit. Dadurch kann ein sicherer Transport des Behälters auf der Vorrichtung ermöglicht werden. Entsprechend kann die Sicherheit des Transfers des Behälters von dem Rundläuferfüller zu dem Verschließer erhöht werden. Wenn beispielsweise der Behälter nicht optimal durch das Halteelement aufgenommen worden ist, kann ein Lösen des Behälters aus dem Halteelement mittels der von der Abdeckvorrichtung ausgehenden Klemmkraft verhindert werden. Dabei können Abdeckvorrichtung und Halteelement zueinander auch derart ausgebildet sein, dass die von der Abdeckvorrichtung ausgehende Klemmkraft die Einnahme einer idealen Aufnahmeposition des Behälters in dem Halteelement begünstigt.

In einer weiter bevorzugten Ausführungsform kann die Abdeckvorrichtung den Behälter gasdicht verschließen. Dies ist besonders bei kohlensäurehaltigen Füllprodukten vorteilhaft, da auf diese Weise Gas aus dem Behälterinneren während dem Transport auf der Vorrichtung nicht entweichen kann. Darüber hinaus verhindert eine gasdicht verschlossene Mündung auch das Eintreten von unerwünschten Gasen oder Schmutz und Staub aus der Umgebung in den Behälter.

In einer bevorzugten Ausgestaltung ist die Abdeckvorrichtung mittels eines Exzenters, einem Pneumatikzylinder und/oder einem Elektromagneten ansteuerbar. Dadurch ist es möglich, eine aktive Ansteuerung des Abdeckelements bereitzustellen.

In einer Weiterbildung ist die Abdeckvorrichtung rotatorisch und/oder translatorisch bewegbar. Dadurch ist es möglich, ein Verschließen und Öffnen der Mündung des Behälters bei einem möglichst geringen Bewegungsumfang der Abdeckvorrichtung bereitzustellen.

In einer weiter bevorzugten Ausführungsform umfasst die Abdeckvorrichtung eine Behandlungseinrichtung zum Kühlen und/oder Spülen des Behälters. Mittels einer Behandlungseinrichtung zum Kühlen ist es möglich, einen Kopfraum des Behälters während des Transfervorgangs, das heißt, während des Transports des Behälters auf der Vorrichtung, mit einem Gas zu kühlen. Dadurch ist es möglich, den Kopfraum des Behälters beziehungsweise das sich im Kopfraum befindliche Füllprodukt auf ideale Bedingungen für den Verschließvorgang vorzubereiten. Eine Kühlung des Kopfraums oder des Gewindebereichs des Behälters ist besonders in einer Kombination mit einem Blasfüller von Bedeutung, wenn der Kopfbereich nach dem Entformen aus der Blasform noch warm ist.

Mittels einer Behandlungseinrichtung zum Spülen des Behälters kann der Kopfraum des Behälters während des Transfervorgangs beispielsweise mit Kohlendioxid oder Stickstoff gespült werden. Dadurch kann der Kopfraum des Behälters für den anschließenden Verschließvorgang vorbereitet werden. Auf diese Weise können nach dem Befüllvorgang in den Kopfraum der Flasche eingetretene, unerwünschte Gase entfernt werden. Weiterhin kann auch ein Stickstoffdroppler vorgesehen sein, um in den Kopfraum Stickstoff einzutropfen. Alternativ kann eine Behandlungseinrichtung zum Spülen auch dazu verwendet werden, Schaum zu zerstören, welcher sich im Kopfraum nach dem Befüllvorgang beziehungsweise während des Befüllvorgangs gebildet hat. Ferner kann die Behandlungseinrichtung auch derart ausgebildet sein, dass damit ein Gewinde auf einer Außenseite des Mündungsbereichs des Behälters gereinigt werden kann.

Die oben genannte Aufgabe wird auch durch ein System mit den Merkmalen des Anspruchs 12 gelöst. Dabei ergeben sich vorteilhafte Ausgestaltungen aus dem Unteranspruch.

Entsprechend wird ein System, bestehend aus einem Blasfüller zum Blasen und anschließendem Befüllen eines Kunststoffbehälters, einer Vorrichtung zum Transportieren eines Behälters von dem Blasfüller an einen Verschließer, und einer Abdeckvorrichtung zum Abdecken eines von der Vorrichtung aufgenommenen Behälters angegeben.

Dadurch kann sichergestellt werden, dass während des Transports des Behälters mit der Vorrichtung kein Füllprodukt aus dem Behälter austritt. Der Zustand, in dem eine Mündung des Behälters unverschlossen ist, das heißt nicht abgedeckt ist, kann somit reduziert werden. Befindet sich der Behälter noch in dem Blasfüller, ist die Mündung des Behälters während des Füllvorgangs durch ein Füllorgan geschlossen. Befindet sich der Behälter in der Vorrichtung zum Transportieren des Behälters von dem Blasfüller an den Verschließer, so ist die Mündung des Behälters durch die Abdeckvorrichtung verschlossen. Nach der Übergabe des Behälters von der Vorrichtung an den Verschließer wird die Mündung des Behälters mit einem entsprechenden Verschlusselement, zum Beispiel einer Kappe, verschlossen. Somit können die Zustände, in welchen die Mündung des mit Füllprodukt gefüllten Behälters offen ist, auf die Übergabepunkte, das heißt, den Übergabepunkt des Behälters vom Blasfüller an die Vorrichtung und den Übergabepunkt des Behälters von der Vorrichtung an den Verschließer, reduziert werden.

In einer bevorzugten Ausgestaltung umfasst die Vorrichtung ein Halteelement, welches derart ausgebildet ist, dass eine senkrecht durch eine Mündungsöffnungsquerschnittebene des Behälters verlaufende Behälterachse unterhalb des Halteelements auf die Rotationsachse zu gerichtet ist.

Dadurch ist es möglich, am Übergabepunkt, an welchem der Behälter von dem Rundläuferfüller an die Vorrichtung übergeben wird und an welchem der Behälter von der Vorrichtung an den Verschließer übergeben wird, den Behälter zu übergeben, ohne dass der Behälter im Zeitpunkt der Übergabe eine Schwenkbewegung erfährt. Folglich ändert eine Behälterachse ihre Neigung relativ zu der Rotationsachse der Vorrichtung nicht, wenn der Behälter von dem Halteelement erfasst beziehungsweise von diesem abgegeben wird. Entsprechend kann ein Überschwappen des in dem Behälter befindlichen Füllprodukts an den Übergabepunkten zwischen dem Rundläuferfüller und der Vorrichtung beziehungsweise der Vorrichtung und dem Verschließer reduziert oder unterbunden werden.

In einer bevorzugten Weiterbildung umfasst die Abdeckvorrichtung eine Behandlungseinrichtung zum Kühlen und/oder Spülen des Behälters. Mittels einer Behandlungseinrichtung zum Kühlen ist es möglich, einen Kopfraum des Behälters während des Transfervorgangs, das heißt, während des Transports des Behälters durch die Vorrichtung, mit Sauerstoff zu kühlen. Dadurch ist es möglich, den Kopfraum des Behälters für den Verschließvorgang vorzubereiten.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine Seitenansicht einer Vorrichtung zum Transportieren eines Behälters von einem Rundläuferfüller zu einem Verschließer kurz vor einem Übergabepunkt,
- Figur 2: schematisch die Vorrichtung aus Figur 1 kurz nach dem Übergabepunkt,
- Figur 3: schematisch eine weitere Vorrichtung zum Transportieren eines Behälters von einem Rundläuferfüller zu einem Verschließer kurz vor einem Übergabepunkt,
- Figur 4: schematisch eine weitere Vorrichtung zum Transportieren eines Behälters von einem Rundläuferfüller an einen Verschließer, welche eine Abdeckvorrichtung in einer ersten Position zeigt,
- Figur 5: schematisch die Vorrichtung aus der Figur 4, bei welcher die Abdeckvorrichtung in einer zweiten Position angeordnet ist,
- Figur 6: schematisch eine Vorrichtung zum Transportieren eines Behälters von einem Rundläuferfüller zu einem Verschließer mit einer Behandlungsvorrichtung,
- Figur 7: schematisch eine Vorrichtung zum Transportieren eines Behälters von einem Rundläuferfüller zu einem Verschließer mit einer weiteren Behandlungsvorrichtung,
- Figur 8: schematisch eine Vorrichtung zum Transportieren eines Behälters von einem Rundläuferfüller zu einem Verschließer mit noch einer weiteren Behandlungsvorrichtung, und
- Figur 9: schematisch den Transportweg eines Behälters von einem Füllorgan über eine Vorrichtung zur Übergabe hin zu einem Verschließer.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

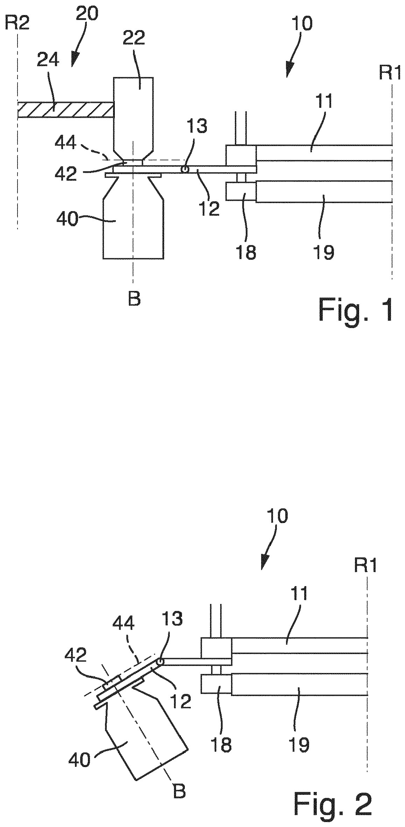

Der Figur 1 ist eine Vorrichtung 10 zur Übergabe eines Behälters 40 von einem Rundläuferfüller an einen Verschließer zu entnehmen. Die Vorrichtung 10 umfasst dabei einen Transferstern 11, welcher um eine Rotationsachse R1 rotiert. Von dem Transferstern 11 erstreckt sich in radialer Richtung nach außen ein Halteelement 12, welches dazu geeignet ist, einen Behälter 40 aufzunehmen und zu transportieren. Figur 1 zeigt die Vorrichtung 10 kurz vor dem Übergabepunkt, an dem der Behälter von dem Rundläuferfüller an die Vorrichtung 10 übergeben wird. In dieser Situation ist ein Füllorgan 22 des Rundläuferfüllers noch auf einer Mündung 42 des Behälters 40 angeordnet. Das Füllorgan 22 ist an dem Rundläuferfüller vorgesehen und läuft mit dem Karussell des Rundläuferfüllers um eine Rotationsachse R2 um. Neben dem Füllorgan 22 ist an dem Karussell des Rundläuferfüllers auch eine Halterung für den Behälter während des Befüllens vorgesehen. Der Behälter 40 befindet sich während des Füllvorgangs in einer Lage, in welcher eine Behälterachse B des Behälters 40 parallel zu der Rotationsachse R2 des Rundläuferfüllers verläuft.

Das Halteelement 12 ist dazu in der Lage, den Behälter 40 in der Lage, in welcher er im Füllorgan ausgerichtet ist, aufzunehmen. In dem gezeigten Ausführungsbeispiel erstreckt sich die Behälterachse B parallel zu der Rotationsachse R2 des Rotationsfüllers, so dass entsprechend eine Übergabe des Behälters an die Vorrichtung 10 in der gleichen Ausrichtung erfolgt.

Der Behälter 40 weist eine nach oben gerichtete Mündung 42 auf, die an ihrem obersten Rand eine Mündungsquerschnittsebene 44 definiert. Die Mündungsquerschnittsebene 44 steht in dem gezeigten Ausführungsbeispiel des Behälters 40, welcher in Form einer herkömmlichen, im Wesentlichen zylinderförmigen Flasche ausgebildet ist, senkrecht auf der Behälterachse B, welche mit der Zylinderachse der Flasche zusammenfällt. Bei anderen Behälterformen kann die Mündung 42 jedoch in einem beliebigen Verhältnis zu den restlichen Teilen des Behälters 40 stehen, so dass nachfolgend auf die Mündungsquerschnittsebene 44 Bezug genommen wird. Nur über die Mündung 42 der den äußersten Rand definierenden Mündungsquerschnittsebene 44 kann Füllprodukt aus dem befüllten Behälter 40 austreten.

Da der Behälter 40 durch die Vorrichtung 10 von einem Rundläuferfüller übernommen wird, ist der Behälter 40 bei der Übernahme bereits mit dem Füllprodukt befüllt.

Das Halteelement 12 kann Klammern aufweisen, mittels welchen es, beispielsweise wie in Figur 1 gezeigt, einen Hals des Behälters 40 greifen kann. Das Öffnen und Schließen der Klammern des Halteelements 12 wird dabei über eine Kurvenrolle 18 gesteuert, welche auf einer Kurvenscheibe 19 abrollt.

Figur 2 zeigt die Vorrichtung 10 aus Figur 1 kurz nach der Übergabe des Behälters 40 an die Vorrichtung 10. Das Halteelement 12 wurde während oder direkt nach der Übergabe mittels einer Schwenkeinrichtung 13 abgewinkelt, so dass der Behälter 40 in einer Position gehalten wird, in welcher die Mündungsquerschnittsebene 44 des Behälters 40 so gehalten ist, dass die senkrecht zu dieser stehende Behälterachse B unterhalb des Halteelements 12 auf die Rotationsachse R1 zu gerichtet ist. Dadurch kann der aufgrund der Übergabe auf das Füllprodukt in dem Behälter 40 wirkende Impuls abgeschwächt oder ausgeglichen werden. Entsprechend kann durch die Schwenkbewegung, welche das Halteelement 12 nach dem Übergabepunkt ausführt, ein Überschwappen des in dem Behälter 40 befindlichen Füllprodukts reduziert oder unterbunden werden, da der Impuls auf das Füllprodukt auf diese Weise aufgefangen oder ausgeglichen werden kann.

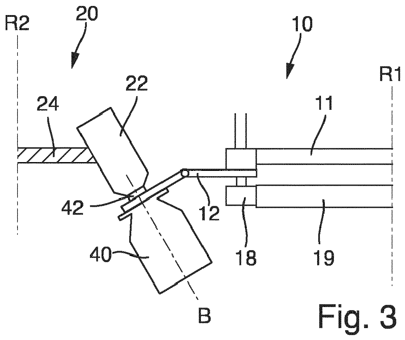

Figur 3 ist eine weitere Vorrichtung 10 zur Übergabe eines Behälters 40 von einem Rundläuferfüller an einen Verschließer zu entnehmen. Die Vorrichtung 10 umfasst dabei einen Transferstern 11, welcher um eine Rotationsachse R1 herum rotiert. Von dem Transferstern 11 aus erstreckt sich wieder in radialer Richtung nach außen ein Halteelement 12, welches dazu geeignet ist, einen Behälter 40 aufzunehmen und zu transportieren. Das Halteelement 12 ist fest abgewinkelt, um den Behälter 40 in der geneigten Lage aufzunehmen, in welcher sich der Behälter während einem vorausgehenden Befüllvorgang befindet. Figur 3 zeigt die Vorrichtung 10 kurz vor dem Übergabepunkt, an dem der Behälter von dem Füllorgan an die Vorrichtung 10 übergeben wird. In dieser Situation ist ein Füllorgan 22 des Rundläuferfüllers noch auf einer Mündung 42 des Behälters 40 angeordnet. Das Füllorgan 22 ist hier wieder ein Teil des Rundläuferfüllers und rotiert um eine Rotationsachse R2 herum. Der Behälter 40 befindet sich während des Füllvorgangs in einer Schräglage, in welcher die Mündungsöffnungsquerschnittebene 44 des Behälters 40 zu der Rotationsachse des Rundläuferfüllers hin geneigt ist und die senkrecht zu der Mündungsquerschnittsebene 44 angeordnete Behälterachse B unterhalb des Halteelements 12 von der Rotationsachse R1 fort geneigt ist. Dadurch kann ein Ausschwappen durch eine Zentrifugalbeschleunigung, welche der Behälter während des Füllvorgangs erfährt, verhindert und die Behälterfüllung begünstigt werden.

Eine solche Anordnung des Behälters 40 mit nach innen gerichteter Mündung findet besonders bei Rundläuferblasfüllern statt, bei welchen die jeweiligen Blasformen schräg gerichtet angeordnet sind, so dass die Zentrifugalbeschleunigung den Blasvorgang weiter unterstützt. Beim Entformen der Behälter nach dem Blas- und Füllvorgang befinden sich die Behälter in dem Rundläuferblasfüller entsprechend in der gezeigten Ausrichtung, so dass sie direkt von der Vorrichtung 10 in dieser Ausrichtung übernommen werden können.

Das abgewinkelte Halteelement 12 ist entsprechend nicht beweglich und kann den Behälter in der durch den Blasfüller vorgegebenen Lage übernehmen. Somit kann der Behälter 40 von dem Füllorgan an die Vorrichtung 10 übergeben werden, ohne dabei eine Schwenkbewegung zu erfahren, wodurch das Verhindern des Austretens von in dem Behälter 40 befindlichen Füllprodukt unterstützt werden kann.

Das Halteelement 12 kann Klammern aufweisen, mittels welchen es, beispielsweise wie in Figur 3 gezeigt, einen Hals des Behälters 40 greifen kann. Das Öffnen und Schließen der Klammern des Halteelements 12 wird dabei über eine Kurvenrolle 18 gesteuert, welche auf einer Kurvenscheibe 19 abrollt.

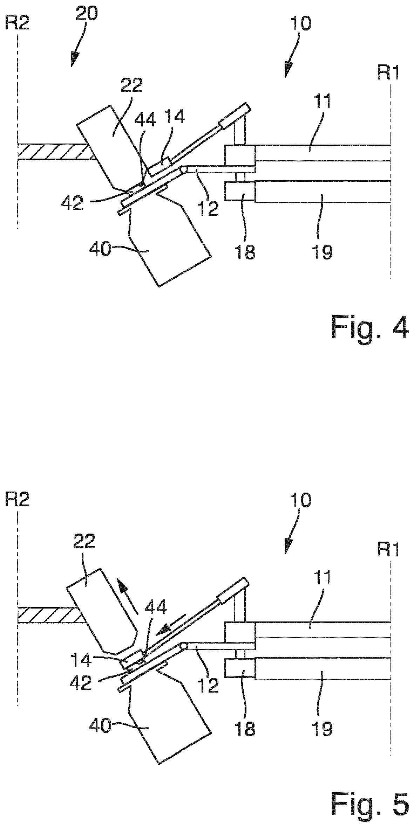

Figur 4 zeigt eine weitere Ausführungsform einer Vorrichtung 10, welche sich von der Vorrichtung aus Figur 3 dadurch unterscheidet, dass eine zusätzliche Abdeckvorrichtung 14 dazu eingerichtet ist, die Mündung 42 des Behälters 40 abzudecken. Die Abdeckvorrichtung 40 befindet sich in Figur 4 in einer passiven Position, in welcher sie nicht mit der Mündung 42 in Kontakt steht.

Figur 5 zeigt die Vorrichtung 10 aus Figur 4 in einer Position kurz nach dem Übergabepunkt, an welchem die Vorrichtung 10 den Behälter 40 von dem Rundläuferfüller aufgenommen hat. In diesem Zustand steht das Füllorgan 22 nicht mehr mit dem Behälter 40 in Kontakt. Die Abdeckvorrichtung 14 befindet sich in einer aktiven Position, in welcher das Abdeckelement 14 mit dem Behälter 40 in Kontakt steht, und die Mündung 42 verschließt. Die Ausrichtung des Abdeckelements 14 erfolgt dabei durch eine Ansteuerung über die Kurvenrolle 18, welche auf der Kurvenscheibe 19 abrollt. Alternativ kann die Ansteuerung auch mittels eines Pneumatikzylinders oder eines Elektromagneten erfolgen. Entsprechend ist die Ansteuerung der Abdeckvorrichtung 14 mit der Ansteuerung der Klammern des Halteelements 12 gekoppelt. Alternativ können die Abdeckvorrichtung und die Klammern des Halteelements auch separat angesteuert werden.

Das Abdeckelement 14 übt in dem in Figur 5 gezeigten Zustand eine zusätzliche Klemmkraft auf den Behälter 40 aus, um diesen in dem Halteelement 12 zu fixieren. Dabei dichtet die Abdeckvorrichtung 14 einen Behälterinnenraum, insbesondere einen Kopfraum, gegenüber der Umgebung gasdicht ab.

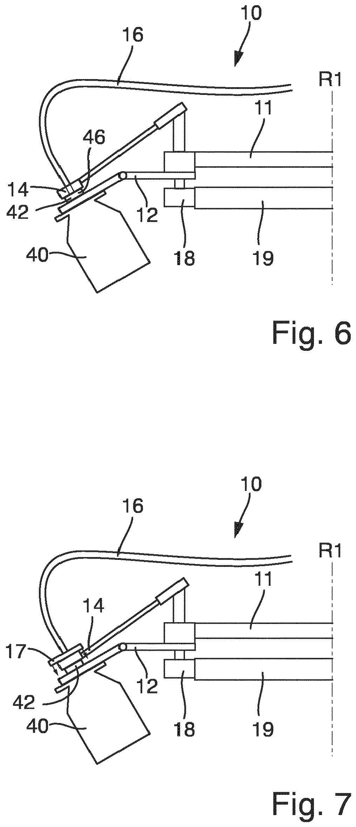

Figur 6 ist eine weitere Ausführungsform der Vorrichtung 10 zu entnehmen, welche sich von den in den Figuren 4 und 5 gezeigten Vorrichtungen dadurch unterscheidet, dass die Abdeckvorrichtung 14 zusätzlich eine Behandlungseinrichtung 16 aufweist. Mittels der Behandlungseinrichtung 16, welche in Form eines Schlauchs ausgebildet ist, ist es möglich, den Kopfraum 46 des Behälters 40 mit einem Fluid zu spülen. Ein Spülgas, welches durch die Behandlungseinrichtung 16 in den Kopfraum 46 eintritt, kann dazu verwendet werden, um Schaum zu zerstören, welcher sich im Kopfraum 46 des Behälters 40 gebildet hat. Alternativ ist mittels der Behandlungseinrichtung 16 eine CO₂-Begasung des Kopfraums 46 möglich. Des Weiteren kann durch die Behandlungseinrichtung 16 mit dem Kopfraum 46 ein Stickstoffdroppler zum Eintropfen von flüssigem Stickstoff in den Kopfraum 46 verbunden werden.

Die Mündung des Schlauchs der Behandlungseinrichtung 16 in der Abdeckvorrichtung 14 kann eine oder mehrere Düsen aufweisen, mittels welchen ein entsprechendes Reinigungs- beziehungsweise Spülmedium in den Kopfraum 46 eingeleitet wird.

Figur 7 ist eine Ausführungsform der Vorrichtung 10 zu entnehmen, welche sich von der in Figur 6 gezeigten Vorrichtung dadurch unterscheidet, dass die Behandlungseinrichtung 16 im Bereich der Abdeckvorrichtung 14 zusätzliche Düsen 17 aufweist, mittels welchen der an die Mündung 42 angrenzende Außenbereich des Behälters 40 gereinigt werden kann. Dadurch kann beispielsweise ein Gewinde des Behälters 40 gereinigt werden.

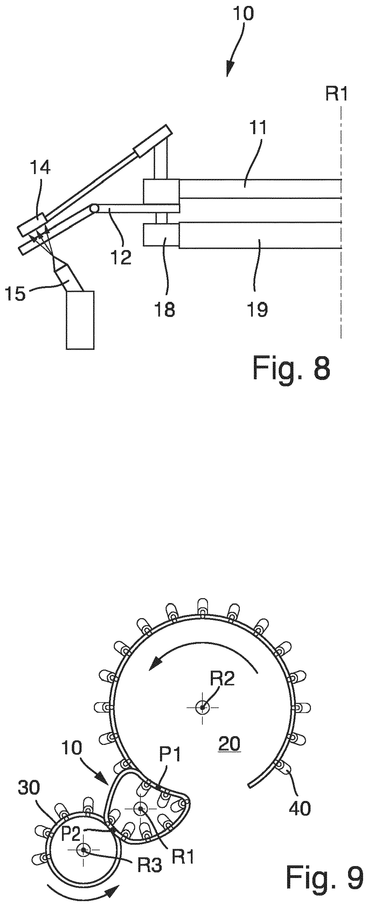

Figur 8 ist die Vorrichtung 10 in einem Zustand zu entnehmen, in dem sich kein Behälter in dem Halteelement 12 befindet. Die in Figur 7 gezeigte Vorrichtung 10 umfasst eine Reinigungsdüse 15, welche in einem Bereich angeordnet ist, in welchem sich im Transportzustand ein Behälter befindet. Mittels der Reinigungsdüse 15 ist es möglich, die Abdeckvorrichtung 14 zu reinigen, indem die Reinigungsdüse 15 die Abdeckvorrichtung 14 mit einer Reinigungsflüssigkeit besprüht. Dabei wird insbesondere der Bereich der Abdeckvorrichtung 14 gereinigt, welcher im Transportzustand mit einem Behälter in Kontakt tritt. Darüber hinaus kann die Reinigungsdüse 15 auch dazu eingesetzt werden, das Halteelement 12 zu reinigen.

Figur 9 ist eine Übersicht einer Anordnung des Rundläuferfüllers 20 der Vorrichtung 10 mit in einem fixen Winkel angeordneten Halteelement 12 und des Verschließers 30 zu entnehmen.Insbesondere kann Figur 9 der Transportweg eines Behälters 40 entlang des Rundläuferfüllers 20, der Vorrichtung 10 und des Verschließers 30 entnommen werden.

Befindet sich der Behälter 40 in dem Rundläuferfüller 20, so wird der Behälter 40 gegen den Uhrzeigersinn um eine Rotationsachse R2 des Rundläuferfüllers 20 bewegt. Während des Transports des Behälters 40 auf dem Rundläuferfüller 20 weist der Behälter 40 eine Schräglage auf. In dieser Schräglage ist die Mündungsöffnungsquerschnittebene des Behälters 40 hin zu der Rotationsachse R2 gerichtet. Dadurch kann einem Ausschwappen des in dem Behälter 40 befindlichen Füllprodukts, welches auf die Zentrifugalbeschleunigung zurückzuführen ist, welche der Behälter 40 durch den Rundläuferfüller 20 erfährt, entgegengewirkt werden.

An einem ersten Übergabepunkt P1 wird der Behälter 40 von dem Rundläuferfüller 20 an die Vorrichtung 10 übergeben. Dabei greift ein Haltelement der Vorrichtung 10 an dem ersten Übergabepunkt P1 den Behälter 40. Durch die in den vorstehenden Figuren gezeigte angewinkelte Ausgestaltung des Halteelements 12 ist es möglich, die Schräglage des Behälters 40 an dem ersten Übergabepunkt P1 beizubehalten. Entsprechend behält der Behälter 40 bei der Übergabe des Behälters 40 von dem Rundläuferfüller 20 an die Vorrichtung 10 seine Schräglage bei. Somit erfährt der Behälter 40 an dem ersten Übergabepunkt P1 keine Schwenkbewegung, durch welche ein sich in dem Behälter 40 befindliches Füllprodukt einen Impuls durch die Verschwenkung des Behälters 40 erfahren könnte und daher aus dem Behälter 40 austreten könnte.

Der Behälter 40 wird mittels der Vorrichtung 10 von dem ersten Übergabepunkt P1 hin zu einem zweiten Übergabepunkt P2 befördert, an welchem der Behälter 40 an den Verschließer 30 übergeben wird. Während des Transports des Behälters 40 auf der Vorrichtung 10 ist die Mündungsöffnungsquerschnittebene des Behälters 40 von der Rotationsachse R1 der Vorrichtung 10 weg geneigt.

Dadurch weist der Behälter 40 am zweiten Übergabepunkt P2 eine Schräglage auf, in welcher die Mündungsöffnungsquerschnittebene 44 des Behälters 40 zu der Rotationsachse R3 des Verschließers hin geneigt ist. Diese Schräglage des Behälters 40 stellt die Anordnung des Behälters 40 relativ zu der Rotationsachse R3 des Verschließers 30 dar, in welcher der Behälter 40 von dem Verschließer 30 nach dem zweiten Übergabepunkt P2 weiter befördert wird. Somit erfährt der Behälter 40 auch an dem zweiten Übergabepunkt P2 keine Schwenkbewegung, durch welche das sich in dem Behälter 40 befindliche Füllprodukt aus diesem austreten könnte.

Besonders vorteilhaft ist die Vorrichtung 10 so ausgestaltet, dass das Halteelement einem Bereich um den eigentlichen Übergabepunkt der Kreisbahn des Behälters 40 im Rundläuferfüller 20 folgt, zum Beispiel mittels eines kurvengesteuerten Transfersterns. So wird eine punktuelle Übergabe vermieden und das Haltelement hat ausreichend viel Zeit für eine sichere Übergabe. Weiterhin bleibt dadurch genügend Zeit, das beispielsweise in den Figuren 4 und 5 gezeigte Abdeckelement noch im Rundläuferfüller 20 auf den Behälter 40 aufzubringen. Somit verlässt der Behälter 40 die Kreisbahn des Rundläuferfüllers 20 erst dann, nachdem der Behälter 40 mittles des Abdeckelements gegen den Austritt des Füllprodukts gesichert wurde.

Somit wird der Effekt, dass die Mündungsöffnungsquerschnittebene des Behälters 40 von der Rotationsachse R1 der Vorrichtung 10 fort geneigt ist und somit ein Austreten des Füllprodukts durch die Zentrifugalkraft durch diese Anordnung auftreten könnte, vermieden.

Die Übergabe des Behälters 40 zum Verschließer 30 kann wiederrum so geschehen, dass das Halteelement der Vorrichtung 10 der Kreisbahn des Verschließers entlang eines gewissen Wegabschnitts folgt. Analog zur Übergabe aus dem Rundläuferfüller kann so eine sicherere Übergabe erreicht werden.

Weiterhin kann das Abdeckelement erst nach einer gewissen Zeitspanne beziehungsweis nach Durchlaufen eines gewissen Wegabschnitts nach der Übergabe vom Behälter 40 entfernt werden. Dadurch können sich eventuell auftretende Schwappbewegungen des Füllprodukts im Behälter 40 durch die Übergabe abbauen.

Alternativ können sich der Rundläuferfüller 20, die Vorrichtung 10 und der Verschließer 30 auch in die entsprechend entgegengesetzte Richtung drehen.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 10: Vorrichtung zum Transportieren eines Behälters
- 11: Transferstern
- 12: Halteelement
- 13: Schwenkeinrichtung
- 14: Abdeckvorrichtung
- 15: Reinigungsdüse
- 16: Behandlungseinrichtung
- 17: Düsen
- 18: Kurvenrolle
- 19: Kurvenscheibe
- 20: Rundläuferfüller
- 22: Füllorgan
- 30: Verschließer
- 40: Behälter
- 42: Mündung
- 44: Mündungsöffnungsquerschnitt
- 46: Kopfraum
- B: Behälterachse
- R1: Rotationsachse
- R2: Rotationsachse
- R3: Rotationsachse
- P1: erster Übergabepunkt
- P2: zweiter Übergabepunkt

## Patentansprüche

1. Vorrichtung (10) zum Transportieren eines befüllten Behälters (40) in einer Rundläufervorrichtung, bevorzugt von einem Rundläuferfüller (20) zu einem Verschließer (30), umfassend: einen um eine Rotationsachse (R1) rotierenden Rundläufer mit einem Halteelement (12) zum Aufnehmen des Behälters (40),
**dadurch gekennzeichnet, dass**
das Halteelement (12) derart ausgebildet, dass der befüllte Behälter (40) so gehalten ist, dass eine senkrecht durch eine Mündungsöffnungsquerschnittebene (44) des Behälters (40) verlaufende Behälterachse (B) unterhalb des Halteelements (12) auf die Rotationsachse (R1) zu gerichtet ist.

2. Vorrichtung (10) nach Anspruch 1, **dadurch gekennzeichnet, dass** das Halteelement (12) eine Schwenkeinrichtung (13) zum Schwenken des Behälters (40) zwischen einer ersten Position, in welcher der Behälter (40) in einer vorgeschalteten Transporteinrichtung gehalten ist, und einer zweiten Position, in welcher die Behälterachse (B) unterhalb des Halteelements (12) auf die Rotationsachse (R1) zu gerichtet ist.

3. Vorrichtung (10) nach Anspruch 1 oder 2, **dadurch gekennzeichnet, dass** das die Schwenkeinrichtung (13) mittels einer Kurve, eines Pneumatikzylinders und/oder eines Elektromagneten ansteuerbar ist.

4. Vorrichtung (10) nach Anspruch 1, **dadurch gekennzeichnet, dass** das Halteelement (12) derart ausgebildet ist, dass der Behälter (40) in einem unveränderlichen Winkel aufgenommen und transportiert werden kann.

5. Vorrichtung (10) nach Anspruch 1 oder 4, **dadurch gekennzeichnet, dass** das Halteelement (12) schräg zur Rotationsachse (R1) verläuft.

6. Vorrichtung (10) nach einem der vorhergehenden Ansprüche, **dadurch gekennzeichnet, dass** das Halteelement (12) eine Klammer zum Aufbringen einer Klemmkraft auf den Behälter (40) umfasst.

7. Vorrichtung (10) nach einem der vorhergehenden Ansprüche, **dadurch gekennzeichnet, dass** ein Blasfüller zum Blasen und Füllen von Kunststoffbehältern vorgesehen ist, und das Halteelement (12) so eingerichtet ist, dass es einen gefüllten Behälter (40) von dem Blasfüller ohne Verschwenken übernehmen kann.

8. Vorrichtung (10) nach einem der vorhergehenden Ansprüche, **dadurch gekennzeichnet, dass** weiterhin eine Abdeckvorrichtung (14) zur Abdeckung einer Mündung (42) des Behälters (40) umfasst ist.

9. Vorrichtung (10) nach Anspruch 8, **dadurch gekennzeichnet, dass** die Abdeckvorrichtung (14) eine zusätzliche Klemmkraft zum Fixieren des Behälters (40) in dem Halteelement (12) bereitstellt.

10. Vorrichtung (10) nach Anspruch 8 oder 9, **dadurch gekennzeichnet, dass** die Abdeckvorrichtung (14) den Behälter (40) gasdicht verschließen kann.

11. Vorrichtung (10) nach einem der Ansprüche 8 bis 10, **dadurch gekennzeichnet, dass** die Abdeckvorrichtung (14) eine Behandlungseinrichtung (16) zum Kühlen und/oder Spülen des Behälters (40) umfasst.

12. System umfassend einen Blasfüller zum Blasen und anschließendem Befüllen eines Behälters (40), einer Vorrichtung (10) zum Transportieren eines befüllten Behälters (40) von dem Blasfüller an einen Verschließer (30), und einer Abdeckvorrichtung (14) zum Abdecken der Mündung (42) eines in der Vorrichtung (10) aufgenommenen befüllten Behälters (40).

13. System nach Anspruch 12, **dadurch gekennzeichnet, dass** die Vorrichtung (10) ein Halteelement (12) umfasst, welches derart ausgebildet ist, dass der befüllte Behälter (40) so gehalten ist, dass eine senkrecht durch eine Mündungsöffnungsquerschnittebene (44) des Behälters (40) verlaufende Behälterachse (B) unterhalb des Halteelements (12) auf die Rotationsachse (R1) zu gerichtet ist.
